# EUROPEAN PATENT APPLICATION

(11) **EP 2 173 069 A1**
(43) Date of publication of application: **07.04.2010**
(21) Application number: 08871218.7
(22) Date of filing: 19.12.2008
(51) Int. Cl.: H04L 12/56

(54) **PATH SELECTION METHOD AND NETWORK SYSTEM, PATH COMPUTATION ELEMENT**

(30) Priority: 27.12.2007 CN 200710305089
(71) Applicant: Huawei Technologies Co., Ltd., Longgang District Shenzhen Guangdong 518129 (CN)
(72) Inventor: WU, Chuanjun, Longgang District Shenzhen 518129 (CN); ZI, Xiaobing, Longgang District Shenzhen 518129 (CN)
(74) Representative: Kreuz, Georg Maria
(86) International application number: PCT/CN2008/073607
(87) International publication number: WO 2009/092246

(57) **Abstract**

A path selection method is provided, which includes the following steps. A middle domain determines a path cost of an inter-domain link from the middle domain to a destination node domain according to a received path cost of an inter-domain link sent by a source node domain, and then sends the path cost to the destination node domain. The middle domain receives an optimal service path from the destination node domain to a destination node returned from the destination node domain, in which the optimal service path is determined according to the path cost of inter-domain link sent by the middle domain, and determines an optimal service path from the middle domain to the destination node according to the received optimal service path and sends the optimal service path to the source node domain, for making the source node domain determine an optimal service path from a source node to the destination node according to the optimal service path sent by the middle domain. Accordingly, a network system and a path computation element are provided. The technical solutions can improve the efficiency of selecting the optimal service path.

## Description

The application claims the benefit of priority to China Patent Application No. 200710305089.2, filed on December 27, 2007, and entitled "path selection method and network system, path computation element", which is incorporated herein by reference in its entirety.

### FIELD OF THE TECHNOLOGY

The present invention relates to the field of communication technology, and more particularly to a path selection method, a network system, and a path computation element (PCE).

### BACKGROUND OF THE INVENTION

Recently, many methods for establishing a network connection exist, and the network connection may be manually configured by a network administrator, or may be automatically configured through a signaling protocol. No matter which method is adopted to configure the connection, a problem of selecting an optimal service path exists. When a network scale is not quite large, each node may collect overall network topologies through an open the shortest path first with traffic engineering (TE) (OSPF-TE) protocol and compute paths. Under a situation that the overall network topologies are saved in nodes, recently a relatively mature method for computing the optimal service path occurs (for example, constrained shortest path first (CSPF) protocol).

However, along with the ever increasing scale of the network, it becomes nonrealistic for each node to collect the overall network topologies and compute the paths. In the existing solution, a big network is divided into a plurality of domains, and a PCE is configured in each domain to compute the paths of the management domain thereof, such that a plurality of PCEs interacts to finish computing the cross-domain optimal service path. Usually, during the computation, the optimal service path is selected according to a sum of link costs of each path, that is, the path having a minimal value of the sum of the link costs is selected as the optimal service path.

When it intends to establish a label switch path (LSP), a path computation client (PCC) sends a request of computing an optimal service path to the PCE through a PCE Communication Protocol (PCEP). The PCE computes an optimal service path and then returns the optimal service path to the PCC, and the PCC establishes the LSP by using the returned path information. If it is necessary to obtain the cross-domain optimal service path, the PCEs corresponding to the relevant domains interact (through the PCEP protocol) to finish computing the optimal service path.

Recently, in a method adopted in the prior art, the paths are computed in segments. That is to say, the cross-domain path computation is divided into computations of a plurality of path segments. All the possible paths are computed in each path segment, and then a permutation and combination process is performed on the possible paths of the plurality of path segments, so as to find the optimal service path.

During the process of researching and practicing the prior art, the inventors find that the prior art has the following problems.

In the prior art, the path is computed in segments, but the path is computed in segments without considering a constraint relation, thus resulting in a quite large computation amount, and it is much more difficult to perform the permutation and combination on the possible paths and find the optimal service path, such that the efficiency of selecting the optimal service path is lower.

### SUMMARY OF THE INVENTION

The present invention is directed to a path selection path, a network system, and a PCE, which are capable of improving the efficiency of selecting an optimal service path.

In order to solve the above technical problems, embodiments of the present invention are implemented through the following technical solutions.

In an embodiment, the present invention provides a path selection method, which includes the following steps. A middle domain determines a path cost of an inter-domain link from the middle domain to a destination node domain according to a received path cost of an inter-domain link sent by a source node domain, and then sends the path cost to the destination node domain. The middle domain receives an optimal service path from the destination node domain to a destination node returned from the destination node domain, in which the optimal service path is determined according to the path cost of inter-domain link sent by the middle domain, and determines an optimal service path from the middle domain to the destination node according to the received optimal service path and sends the optimal service path to the source node domain, for making the source node domain determine an optimal service path from a source node to the destination node according to the optimal service path sent by the middle domain.

In an embodiment, the present invention further provides a network system, which includes a source node domain having a source node, a middle domain, and a destination node domain having a destination node. The middle domain receives a path cost of an inter-domain link sent by the source node domain, determines a path cost of an inter-domain link from the middle domain to the destination node domain according to the path cost of the inter-domain link sent by the source node domain, and sends the path cost to the destination node domain. The middle domain receives an optimal service path from the destination node domain to the destination node returned from the destination node domain, in which the optimal service path is determined according to the path cost of inter-domain link sent by the middle domain, and determines an optimal service path from the middle domain to the destination node according to the received optimal service path and sends the optimal service path to the source node domain, for making the source node domain determine an optimal service path from the source node to the destination node according to the optimal service path sent by the middle domain.

In an embodiment, the present invention further provides a PCE, which includes a receiving unit, adapted to receive a path selection request carrying a path cost of an inter-domain link sent by a previous domain; a processing unit, adapted to determine a path cost of an inter-domain link from the present domain to a next domain according to the path cost of the inter-domain link received by the receiving unit; and a sending unit, adapted to send the path cost of the inter-domain link determined by the processing unit out.

It may be known from the technical solutions that in the embodiments of the present invention, the optimal service path is determined by using the path cost of the inter-domain link as a constraint condition, thus having a simpler procedure, in which the final optimal service path is obtained without computing all the possible optimal service paths of all domains and performing a permutation and combination process, thereby improving the efficiency of selecting the cross-domain optimal service path.

### BRIEF DESCRIPTION OF THE DRAWINGS

FIG. 1 is a flow chart of a path selection method according to an embodiment of the present invention;
FIG. 2 is a schematic structural view of an application scenario according to an embodiment of the present invention;
FIG. 3 is a flow chart of a path selection method corresponding to FIG. 2 according to an embodiment of the present invention;
FIG. 4 is a schematic structural view of a network system according to an embodiment of the present invention; and
FIG. 5 is a schematic view of a PCE according to an embodiment of the present invention.

### DETAILED DESCRIPTION OF THE EMBODIMENTS

The present invention provides a path selection method, which is capable of improving the efficiency of selecting an optimal service path.

In the present invention, a computation manner in domains based on the constraint is adopted. During the computation of the optimal service path, each divided domain in the network computes the optimal service path of the present domain by using a computation result (a path cost of an inter-domain link) of a previous domain as a constraint condition, and then delivers the computation result to a next domain as the constraint condition. After determining the unique optimal service path to a destination node, the last domain returns the unique optimal service path to the previous domain. The previous domain determines the unique optimal service path of the present domain according to the information of the inter-domain link. Finally, the first domain (that is, a source node domain) determines the complete optimal service path from a source node to the destination node. The determination of the optimal service path is described as an example, but the present invention is not limited here.

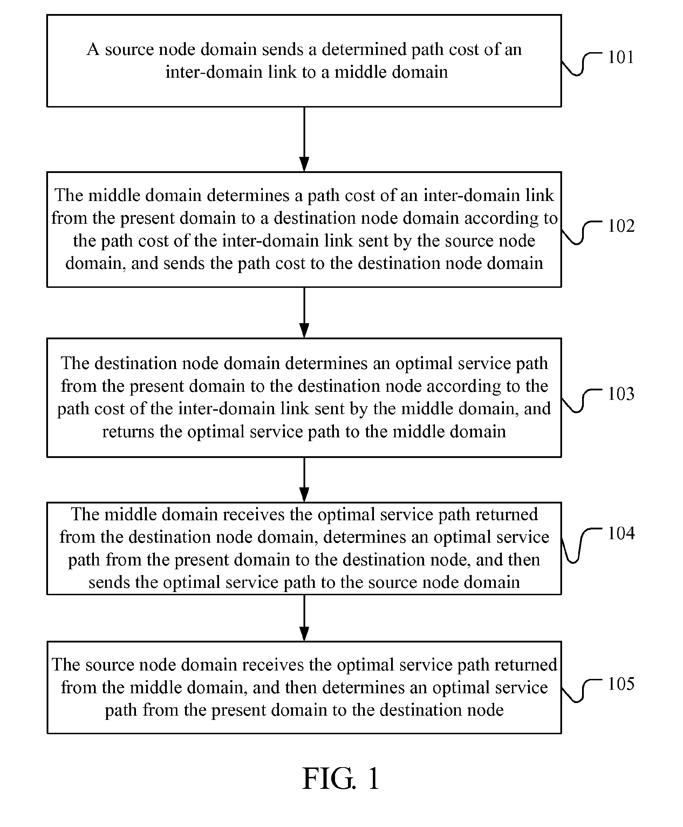

FIG. 1 is a flow chart of a path selection method according to an embodiment of the present invention. Referring to FIG. 1, the method includes the following steps.

In Step 101, a source node domain sends a determined path cost of an inter-domain link to a middle domain.

After receiving a computing request of computing an optimal service path from a source node to a destination node, the source node domain computes all the possible optimal service paths from the present domain to border nodes of the middle domain, determines an outgoing link to the middle domain (an incoming link from the source node main to the present domain, for the middle domain) according to the optimal service path, that is, the path cost of the inter-domain link from the source node domain to the middle domain, and forwards the computing request carrying the path cost of the inter-domain link to the middle domain.

Usually, during the computation, the optimal service path is selected according to a sum of link costs of each path, that is, the path having a minimal value of the sum of the link costs is selected as the optimal service path.

In Step 102, the middle domain determines a path cost of an inter-domain link from the present domain to a destination node domain according to the path cost of the inter-domain link sent by the source node domain, and sends the path cost to the destination node domain.

The middle domain determines all the possible optimal service paths from the present domain to border nodes of the destination node domain according to the path cost of the inter-domain link sent by the source node domain, then determines the path cost of the inter-domain link to the destination node domain, and sends the path cost to the destination node domain.

If the middle domain has a plurality of domains, each domain computes all the possible optimal service paths from the present domain to border nodes of the next domain by using the path cost of the inter-domain link as a constraint condition, and then determines the path cost of inter-domain link to the next domain.

In Step 103, the destination node domain determines an optimal service path from the present domain to the destination node according to the path cost of the inter-domain link sent by the middle domain, and returns the optimal service path to the middle domain.

In Step 104, the middle domain receives the optimal service path returned from the destination node domain, determines an optimal service path from the present domain to the destination node, and then sends the optimal service path to the source node domain.

After receiving the optimal service path returned from the destination node domain, from all the determined possible optimal service paths from the present domain to the border nodes of the destination node domain, the middle domain determines the unique optimal service path in the present domain from the present domain to the destination node according to the inter-domain link in the received optimal service path, and determines the unique optimal service path from the present domain to the destination node according to the received optimal service path.

In Step 105, the source node domain receives the optimal service path returned from the middle domain, and then determines an optimal service path from the present domain to the destination node.

After receiving the optimal service path returned from the middle domain, from all the determined possible optimal service paths from the present domain to the border nodes of the destination node domain, the source node domain determines the unique optimal service path in the present domain from the present domain to the destination node according to the inter-domain link in the received optimal service path, and determines the unique optimal service path from the present domain to the destination node according to the received optimal service path.

The description is given with a particular application embodiment in the following.

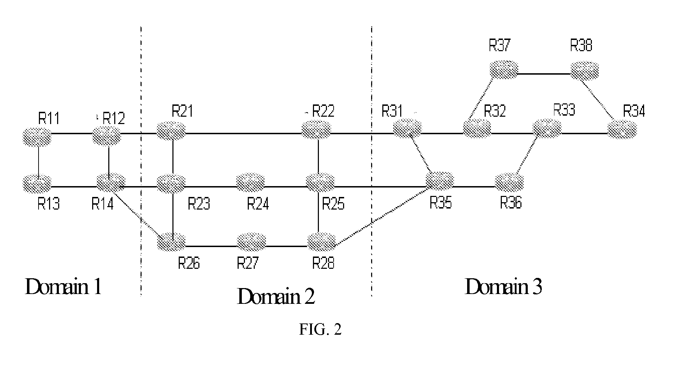

FIG. 2 is a schematic structural view of an application scenario according to an embodiment of the present invention.

Referring to FIG. 2, the network is composed of three domains, and each domain includes a plurality of nodes. For ease of computation, it is assumed that an inter-node link cost is 1, and PCEs of the three domains are respectively integrated to a node R12/R22/R31. Particularly, domain 1 includes nodes R11, R12, R13, and R14, in which the R12 serves as a PCE1; domain 2 includes nodes R21 to R28, in which the R22 serves as a PCE2; and domain 3 includes nodes R31 to R38, in which the R31 serves as a PCE3. Here, a cross-domain optimal service path from the source node R11 to the destination node R34 needs to be computed.

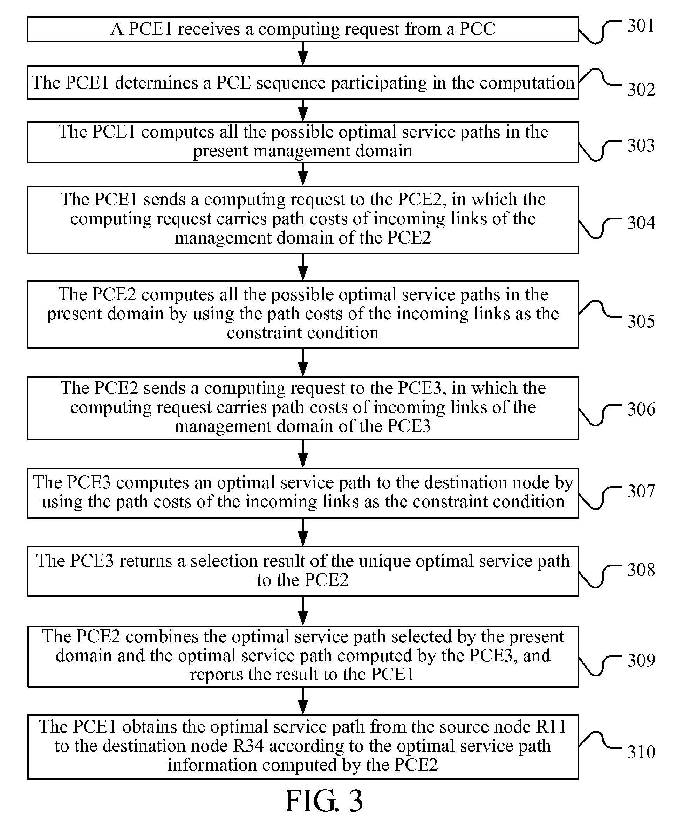

FIG. 3 is a flow chart of a path selection method corresponding to FIG. 2 according to an embodiment of the present invention. Referring to FIG. 3, the method includes the following steps.

In Step 301, a PCE1 of a domain 1 receives from a PCC a computing request of computing an optimal service path from R11 to R34 through a PCEP protocol.

Here, the PCC may be the node R11 or a network administrator.

In Step 302, the PCE1 determines a PCE sequence participating in the computation.

The PCE1 determines the PCE sequence participating in the computation according to the source node R11 and the destination node R34, that is, determines to interact with which PCEs. The PCE sequence participating in the computation may be determined through pre-configuration, or may be determined through a network topology relation. In the embodiment of the present invention, the R11 pertains to the domain 1, the R34 pertains to a domain 3, and it is necessary to pass through a domain 2 to reach the R34 of the domain 3 from the R11, so the determined PCE sequence participating in the computation is the PCE1 of the domain 1, a PCE2 of the domain 2, and a PCE 3 of the domain 3.

In Step 303, the PCE1 computes all the possible optimal service paths in the present management domain.

The PCE1 computes all the possible optimal service paths from the present management domain (that is, the domain 1) to border nodes of the management domain of the PCE2 (that is, the domain 2). Here, the border nodes may be acquired according to the network topology relation. In this embodiment, the possible optimal service paths are ((R11, R12, R21), (R11, R13, R14, R23), and (R11, R13, R14, R26)). A path cost of (R11, R12, R21) is 3, a path cost of (R11, R13, R14, R23) is 4, and a path cost of (R11, R13, R14, R26) is 4.

In Step 304, the PCE1 sends a computing request to the PCE2 through the PCEP protocol, in which the computing request carries information of incoming links (R12->R21, R14->R26, and R14->R23) of the management domain of the PCE2 and information of path costs.

The path cost of the incoming link R12->R21 is 3, that is, the path cost is obtained according to (R11, R12, R21), the path cost of the incoming link R14->R26 is 3, that is, the path cost is obtained according to (R13, R14, R26), and the path cost of the incoming link R14->R23 is 3, that is, the path cost is obtained according to (R13, R14, R23).

The incoming links (R12->R21, R14->R26, and R14->R23) of the management domain of the PCE2 are outgoing links of the management domain of the PCE1.

In Step 305, the PCE2 computes information of all the possible optimal service paths from the present management domain (that is, the domain 2) to border nodes of a management domain of the PCE3 (that is, the domain 3) by using the path costs of the incoming links (R12->R21, R14->R26, and R14->R23) as the constraint condition.

The border nodes of the domain 3 may be acquired according to the network topology relation. Computation results of the PCE2 in this step are ((R12, R21, R22, R31), (R14, R23, R24, R25, R35), and (R14, R26, R27, R28, R35)).

In Step 306, the PCE2 sends a computing request to the PCE3 through the PCEP protocol, in which the computing request carries information of incoming links (R22->R31, R25->R35, and R28->R35) of the management domain of the PCE3 and information of path costs.

The path costs of the incoming links (R22->R31, R25->R35, and R28->R35) are respectively 3, 4, and 4.

The incoming links (R22->R31, R25->R35, and R28->R35) of the management domain of the PCE3 are outgoing links of the management domain of the PCE2.

In Step 307, the PCE3 computes a unique optimal service path to the destination node R34 in the present domain by using the path costs of the incoming links (R22->R31, R25->R35, and R28->R35) as the constraint condition.

As one node, that is, the destination node, is reached, the unique optimal service path to the destination node is computed by using the path costs of the incoming link as the constraint condition. A computation result of the PCE3 is (R22, R31, R32, R33, R34), and it is determined that information of the incoming link in the present domain of the optimal service path to the destination node is (link R22->R31).

In Step 308, the PCE3 returns a selection result of the unique optimal service path (R22, R31, R32, R33, R34) to the PCE2.

In Step 309, the PCE2 knows that the information of the incoming link selected by the PCE3 is (link R22->R31) according to the received selection result of the optimal service path, determines the information of the unique optimal service path (R12, R21, R22, R31) in the present domain from all the determined possible optimal service paths, and determines the information of the incoming link (link R12->R21) in the present domain of the optimal service path to the destination node. The PCE2 obtains the result of the optimal service path (R12, R21, R22, R31, R32, R33, R34) after combining the optimal service path selected by the present domain and the optimal service path computed by the PCE3, and reports the result to the PCE1 as the information of the optimal service path of the next domain.

In Step 310, the PCE1 knows that the information of the incoming link selected by the PCE2 is (link R12->R21) according to the received selection result of the optimal service path, determines the unique optimal service path (R11, R12, R21) in the present domain from all the determined possible optimal service paths, and obtains the optimal service path (R11, R12, R21, R22, R31, R32, R33, R34) from the source node R11 to the destination node R34 according to the optimal service path information computed by the PCE2.

After determining the optimal service path (R11, R12, R21, R22, R31, R32, R33, R34) from the R11 to the R34, the PCE1 sends the optimal service path to the PCC through the PCEP protocol.

It may be found that in the embodiments of the present invention, the optimal service path is determined by using the path cost of the inter-domain link as the constraint condition, thus having a simpler procedure, in which the final optimal service path is obtained without computing all the possible optimal service paths of all domains and performing a permutation and combination process as in the prior art, thereby improving the efficiency of selecting the cross-domain optimal service path.

In the above, the path selection method according to the embodiment of the present invention is introduced in detail, accordingly, in an embodiment, the present invention provides a network system.

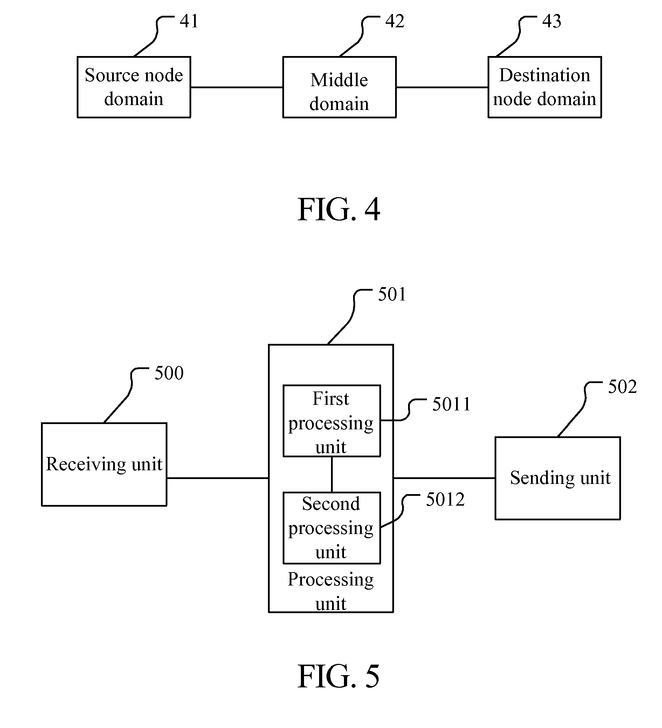

FIG. 4 is a schematic structural view of a network system according to an embodiment of the present invention.

Referring to FIG. 4, the network system includes a source node domain 41 having a source node, a middle domain 42, and a destination node domain 43 having a destination node. In the content described in the following, a determination of an optimal service path is described as an example, but the present invention is not limited here.

The middle domain 42 receives a path cost of an inter-domain link sent by the source node domain 41, determines a path cost of an inter-domain link from the middle domain 42 to the destination node domain 43 according to the path cost of the inter-domain link sent by the source node domain 41, and sends the path cost to the destination node domain 43.

The middle domain 42 receives an optimal service path from the destination node domain 43 to the destination node returned from the destination node domain 43, in which the optimal service path is determined according to the path cost of inter-domain link sent by the middle domain 42, and determines an optimal service path from the middle domain 42 to the destination node according to the received optimal service path and sends the optimal service path to the source node domain 41, for making the source node domain 41 determine an optimal service path from the source node to the destination node according to the optimal service path sent by the middle domain 42.

After obtaining service paths from the present domain to border nodes of the middle domain 42, the source node domain 41 determines the path cost of the inter-domain link to the middle domain 42. After obtaining service paths from the present domain to border nodes of the destination node domain 43, the middle domain 42 determines the path cost of the inter-domain link to the destination node domain.

The middle domain 42 determines service paths in the present domain according to the inter-domain link in the received optimal service path, and determines the optimal service path from the middle domain 42 to the destination node according to the received optimal service path.

The source node domain 41 determines service paths in the present domain according to the inter-domain link in the optimal service path sent by the middle domain 42, and determines the optimal service path from the source node to the destination node according to the received optimal service path.

In an embodiment, the present invention further provides a PCE.

FIG. 5 is a schematic view of a PCE according to an embodiment of the present invention.

Referring to FIG. 5, the PCE includes a receiving unit 500, a processing unit 501, and a sending unit 502.

The receiving unit 500 is adapted to receive a path selection request carrying a path cost of an inter-domain link sent by a previous domain

The processing unit 501 is adapted to determine a path cost of an inter-domain link from the present domain to a next domain according to the path cost of the inter-domain link received by the receiving unit 500.

The sending unit 502 is adapted to send the path cost of the inter-domain link determined by the processing unit 501 out.

The processing unit 501 includes a first processing unit 5011 and a second processing unit 5012.

The first processing unit 5011 is adapted to obtain service paths from the present domain to border nodes of the next domain according to the path cost of the inter-domain link received by the receiving unit 500.

The second processing unit 5012 is adapted to determine the path cost of the inter-domain link to the next domain according to the service paths to the border nodes of the next domain obtained by the first processing unit 5011.

To sum up, in the embodiments of the present invention, the optimal service path is determined by using the path cost of the inter-domain link as the constraint condition, thus having a simpler procedure, in which the final optimal service path is obtained without computing all the possible optimal service paths of all domains and performing the permutation and combination process, thereby improving the efficiency of selecting the cross-domain optimal service path.

The path selection method, the network system, and the PCE of the present invention are described in detail above. The principle and implementation of the present invention are described herein through specific examples. Persons of ordinary skill in the art can make variations and modifications to the present invention in terms of the specific implementations and application scopes according to the ideas of the present invention. Therefore, the specification shall not be construed as limitations to the present invention.

## Claims

1. A path selection method, comprising:
determining, by a middle domain, a path cost of an inter-domain link from the middle domain to a destination node domain according to a received path cost of an inter-domain link sent by a source node domain, and sending the path cost to the destination node domain; and
receiving, by the middle domain, an optimal service path from the destination node domain to a destination node returned from the destination node domain, wherein the optimal service path is determined according to the path cost of inter-domain link sent by the middle domain, determining an optimal service path from the middle domain to the destination node according to the received optimal service path, and sending the optimal service path to the source node domain, for making the source node domain determine an optimal service path from a source node to the destination node according to the optimal service path sent by the middle domain.

2. The path selection method according to claim 1, wherein
the path cost of the inter-domain link sent by the source node domain and received by the middle domain is determined after the source node domain obtains service paths from the present domain to border nodes of the middle domain; and
the path cost of the inter-domain link from the middle domain to the destination node domain determined by the middle domain is determined after the middle domain obtains service paths from the present domain to border nodes of the destination node domain according to the path cost of the inter-domain link sent by the source node domain.

3. The path selection method according to claim 1 or 2, wherein
the determining, by the middle domain, the optimal service path from the middle domain to the destination node according to the received optimal service path comprises:
determining, by the middle domain, service paths in the present domain according to the inter-domain link in the received optimal service path, and determining the optimal service path from the middle domain to the destination node according to the received optimal service path.

4. The path selection method according to claim 1 or 2, wherein
the making the source node domain determine the optimal service path from the source node to the destination node according to the optimal service path sent by the middle domain comprises:
making the source node domain determine service paths in the present domain according to the inter-domain link in the optimal service path sent by the middle domain, and determine the optimal service path from the source node to the destination node according to the received optimal service path.

5. The path selection method according to claim 1 or 2, wherein
when the middle domain has at least two domains, each domain of the middle domain determines the path cost of the inter-domain link from the present domain to a next domain according to the path cost of the inter-domain link sent by the previous domain, and sends the path cost to the next domain.

6. The path selection method according to claim 1 or 2, wherein
when the middle domain has at least two domains, the domain adjacent to the destination node domain determines the optimal service path from the present domain to the destination node according to the received optimal service path returned from the destination node domain, and sends the optimal service path to a previous domain, and the previous domain determines the optimal service path to the destination node domain, and sends the optimal service path to the source node domain.

7. A network system, comprising:
a source node domain having a source node, a middle domain, and a destination node domain having a destination node,
wherein the middle domain receives a path cost of an inter-domain link sent by the source node domain, determines a path cost of an inter-domain link from the middle domain to the destination node domain according to the path cost of the inter-domain link sent by the source node domain, and sends the path cost to the destination node domain; and
the middle domain receives an optimal service path from the destination node domain to the destination node returned from the destination node domain, wherein the optimal service path is determined according to the path cost of inter-domain link sent by the middle domain, and determines an optimal service path from the middle domain to the destination node according to the received optimal service path and sends the optimal service path to the source node domain, for making the source node domain determine an optimal service path from the source node to the destination node according to the optimal service path sent by the middle domain.

8. The network system according to claim 7, wherein
after obtaining service paths from the present domain to border nodes of the middle domain, the source node domain determines the path cost of the inter-domain link to the middle domain; and
after obtaining service paths from the present domain to border nodes of the destination node domain, the middle domain determines the path cost of the inter-domain link to the destination node domain.

9. The network system method according to claim 7 or 8, wherein
the middle domain determines service paths in the present domain according to the inter-domain link in the received optimal service path, and determines the optimal service path from the middle domain to the destination node according to the received optimal service path.

10. The network system method according to claim 7 or 8, wherein
the source node domain determines service paths in the present domain according to the inter-domain link in the optimal service path sent by the middle domain, and determines the optimal service path from the source node to the destination node according to the received optimal service path.

11. A path computation element (PCE), comprising:
a receiving unit, adapted to receive a path selection request carrying a path cost of an inter-domain link sent by a previous domain;
a processing unit, adapted to determine a path cost of an inter-domain link from the present domain to a next domain according to the path cost of the inter-domain link received by the receiving unit; and
a sending unit, adapted to send the path cost of the inter-domain link determined by the processing unit out.

12. The PCE according to claim 11, wherein the processing unit comprises:
a first processing unit, adapted to obtain service paths from the present domain to border nodes of the next domain, according to the path cost of the inter-domain link received by the receiving unit; and
a second processing unit, adapted to determine the path cost of the inter-domain link to the next domain according to the service paths to the border nodes of the next domain obtained by the first processing unit.
